# EUROPÄISCHE PATENTANMELDUNG

(11) **EP 1 429 044 A1**
(43) Veröffentlichungstag der Anmeldung: **16.06.2004**
(21) Anmeldenummer: 03025130.0
(22) Anmeldetag: 03.11.2003
(51) Int. Cl.: F16D 23/02, F16D 69/04

(54) **Verfahren zum Herstellen eines im Bereich einer Lagerfläche mit einem reibungsmindernden Belag beschichteten Gegenstandes**

(30) Priorität: 11.12.2002 DE 10257831
(71) Anmelder: Otto Fuchs KG, 58540 Meinerzhagen (DE)
(72) Erfinder: Münster, Jürgen, Dipl.-Ing., 58540 Meinerzhagen (DE)
(74) Vertreter: Schröter & Haverkamp

(57) **Zusammenfassung**

Ein Verfahren zum Herstellen eines im Bereich einer Lagerfläche 5, 6, 7 mit einem reibungsminderen Belag B beschichteten Gegenstandes ist dadurch bestimmt, dass die Lagerfläche 5, 6, 7 des Gegenstandes 2, 3, 4 ohne Zwischenschaltung eines spanenden Bearbeitungsschrittes mit dem Belag B mit folgender Maßgabe beschichtet wird:
- Aufbringen eines organischen Belages B in seinem nicht ausgehärteten Zustand auf die Lagerfläche 5, 6, 7,
- Erwärmen des Belages B unter Ausübung eines zur Oberfläche 5, 6, 7 des Gegenstandes gerichteten Druckes, wodurch der Belag B zunächst erweicht, um auf der Oberfläche des Gegenstandes 2, 3, 6 unterhalb des Belages B befindliche Unebenheiten auszugleichen, und
- anschließend Aushärten des Belages B.

## Beschreibung

Die Erfindung betrifft ein Verfahren zum Herstellen eines im Bereich einer Lagerfläche mit einem reibungs- und verschleißoptimierten Belag beschichteten Gegenstandes.

Es gibt zahlreiche Anwendungsfälle, bei denen Gegenstände, insbesondere Metallteile mit einem reibungs- und verschleißoptimierten Belag beschichtet sind. Beispielhaft können an dieser Stelle Synchronringe zum Herbeiführen einer Synchronisierung in einem Getriebe genannt sein. Bei einer Synchronisierung sind zwei oder auch drei Ringkörper konzentrisch zueinander angeordnet und aneinander gelagert. Zum Reduzieren des Verschleißes und einer Reibung zwischen den einzelnen, aus Metall hergestellten Synchronringen kann zwischen jeweils zwei Synchronringen ein reibungs- und verschleißoptimierter Belag angeordnet. Dieser reibungsund verschleißoptimierte Belag ist auf die Lagerfläche eines Ringes aufgetragen. Zum Einsatz kommen als Beläge solche, die durch Flammspritzen oder Streusintern aufgebracht werden, und solche, bei denen ein organischer Belag auf die Lagerfläche des Ringes aufgebracht wird. Bei Einsatz von organischen Belägen können solche verwendet werden, die bereits ausgehärtet auf den Gegenstand bzw. auf die Lagerfläche des Gegenstandes aufgebracht werden. Ferner gibt es solche reibungs- und verschleißoptimierte Beläge, die nicht ausgehärtet auf die Lagerfläche des Gegenstandes aufgebracht und erst anschließend ausgehärtet werden. Unabhängig von der Art des verwendeten reibungs- und verschleißoptimierten Belages wird vor dem Schritt des Beschichtens der Lagerfläche des Gegenstandes, beispielsweise des Synchronringes mit dem Belag die Lagerfläche durch einen spanenden Bearbeitungsschritt geglättet. Sychronringe können beispielsweise auch durch Schmieden hergestellt werden. Bei derartig hergestellten Synchronringen ist die Durchführung des spanenden Bearbeitungsschrittes zum Vorbereiten der Lagerfläche nicht nur vorgesehen, um die Lagerfläche ausreichend glatt auszugestalten, sondern insbesondere auch um einen Exzentrizitätsausgleich mit dem äußeren Verzahnungsbereich des Synchronringes herbeizuführen. Nach diesem Bearbeitungsschritt wird die auf diese Weise vorbereitete Lagerfläche mit dem gewünschten reibungs- und verschleißoptimierten Belag beschichtet.

Aus DE 43 40 464 A1 ist ein Verfahren zum Herstellen eines Reibringes beschrieben, der aus einem Blechzuschnitt geformt wird. Bei dem Gegenstand dieses Verfahrens wird auf den noch nicht umgeformten Blechzuschnitt die für den Reibbelag vorgesehene Pulvermischung mit einem Kunstharzbindemittel vermengt aufgetragen. Die Umformung des Blechzuschnittes zum Erstellen des Reibringes erfolgt, solange das Kunstharzbindemittel noch nicht vollständig ausgehärtet ist. Die Aushärtung des Kunstharzbindemittels erfolgt erst nach der Umformung des Blechzuschnittes. Mit diesem Verfahren können mit einem noch nicht ausgehärteten Reibbelag beschichtete Blechzuschnitte umgeformt werden, ohne dass die Gefahr besteht, dass bei der Umformung der Reibbelag beschädigt wird oder die Umformraten durch die Deformierbarkeit des Reibbelages beeinträchtigt sind.

Auch wenn bei den vorbeschriebenen Verfahren zum Herstellen eines im Bereich einer Lagerfläche mit einem reibungs- und verschleißoptimierten Belag beschichteten Gegenstandes die damit hergestellten Gegenstände, beispielsweise Synchronringe den an sie gestellten Anforderungen genügen, wäre es wünschenswert, das Herstellungsverfahren eines solchen Gegenstandes zu vereinfachen, insbesondere wenn die zu beschichtenden Gegenstände Schmiedeteile sind.

Der Erfindung liegt daher die Aufgabe zugrunde, ein eingangs genanntes, gattungsgemäßes Verfahren dergestalt weiterzubilden, dass das Herstellungsverfahren durch weniger Verfahrensschritte vereinfacht ist.

Diese Aufgabe wird erfindungsgemäß durch ein eingangs genanntes Verfahren gelöst, bei dem die Lagerfläche des Gegenstandes ohne Zwischenschaltung eines spanenden Bearbeitungsschrittes mit dem Belag mit folgender Maßgabe beschichtet wird:
- Aufbringen eines organischen Belages in seinem nicht ausgehärteten Zustand auf die Lagerfläche,
- Erwärmen des Belages unter Ausübung eines zur Oberfläche des Gegenstandes gerichteten Druckes, wodurch der Belag (B) zunächst erweicht, um auf der Oberfläche des Gegenstandes unterhalb des Belages befindliche Unebenheiten auszugleichen, und
- anschließend Aushärten des Belages.

Bei diesem Verfahren erfolgt eine Beschichtung der Lagerfläche des Gegenstandes, beispielsweise eines Synchronringes ohne der beim vorbekannten Stand der Technik notwendigen Zwischenschaltung eines spanenden Bearbeitungsschrittes. Eingesetzt wird bei diesem Verfahren als reibungs- und verschleißoptimierter Belag ein organischer Belag, der in seinem nicht ausgehärteten Zustand auf die Lagerfläche in einem ersten Verfahrensschritt aufgebracht wird. Beim Gegenstand dieses Verfahrens wird der Umstand ausgenutzt, dass der noch nicht ausgehärtete Belag bei einer Erwärmung erweicht und somit der Belag als solches zum Ausgleich von auf der Oberfläche des Gegenstandes unterhalb des Belages befindlichen Unebenheiten und insbesondere auch zum Ausgleichen einer möglichen Exzentrizität des äußeren Verzahnungsbereiches gegenüber der Lagerfläche dienen kann. Zu diesem Zweck wird der organische und noch nicht ausgehärtete Belag, nachdem dieser auf die Lagerfläche des Gegenstandes aufgebracht worden ist, erwärmt und gleichzeitig unter einen zur Oberfläche der Lagerfläche des Gegenstandes gerichteten Druck gestellt. Bei Erweichen des Belages wird infolge der Druckbeaufschlagung Material in Oberflächenvertiefungen hineingedrückt sowie der gewünschte Exzentrizitätsausgleich herbeigeführt. Letzteres erfordert eine sehr genau definierte Anordnung zwischen dem Gegenstand, etwa dem Synchronring und dem zur Druckbeaufschlagung benutzten Werkzeug. Anschließend wird der Belag ausgehärtet.

Das Ausgleichen von Oberflächenunebenheiten bzw. -rauhigkeiten der Lagerfläche des Gegenstandes durch Einpressen von Belagmaterial hat zudem den Vorteil, dass eine bezogen auf die Drehbeanspruchung des Belages formschlüssige Verklammerungen zwischen dem Belag und der eigentlichen Lagerfläche des Gegenstandes ausgebildet wird. Somit ist durch dieses Verfahren nicht nur die Herstellung eines solchen, mit einem reibungs- und verschleißoptimierten Belag beschichteten Gegenstandes vereinfacht, sondern die beim vorbekannten Stand der Technik als nachteilig hingenommenen Eigenschaft dahingehend als Vorteil genutzt, dass die eigentliche Verbindung zwischen dem reibungs- und verschleißoptimierten Belag und dem diesen Belag tragenden Gegenstand verbessert ist.

Insbesondere kann mit diesem Verfahren auch ein Gegenstand mit einem solchen Belag beschichtet werden, der grundsätzlich keine glatte Oberfläche aufweist, wie beispielsweise ein Keramikgegenstand oder ein gesindertes Metallteil, beispielsweise ein gesinterter Synchronring.

In aller Regel wird man die Stärke des nicht ausgehärteten Belages bei seinem Auftrag auf die Lagerfläche des Gegenstandes mit einem bestimmten Aufmaß bzw. mit einem bestimmten Zuschlag versehen, wobei bei dem Schritt des Erwärmens des Belages und des Ausüben des auf den Belag gerichteten Druckes die Belagstärke in die gewünschte Stärke gebracht wird. Das durch das Aufmaß überschüssige Belagmaterial wird bei diesem Schritt zum Ausgleich der Oberflächenunebenheiten und - rauhigkeiten der Lagerfläche des Gegenstandes genutzt. Gleichzeitig wird bei dem Schritt des Druckausübens eine Verdichtung des Belagmaterials auf den erforderlichen Endzustand herbeigeführt.

Nachfolgend ist die Erfindung anhand eines Ausführungsbeispiels unter Bezugnahme auf die beigefügten Figuren beschrieben. Es zeigen:
- **Fig. 1:**: einen Querschnitt durch eine 3-fach Konus Synchronisierung,
- **Fig. 2:**: eine vergrößerte Darstellung eines Ausschnittes der Figur 1,
- **Fig. 3:**: eine weitere Vergrößerung eines Ausschnittes der Figur 2, darstellend den Übergangsbereich zwischen der Lagerfläche eines Synchronringes und einem auf diese Lagerfläche aufgebrachten reibungs- und verschleißoptimierten Belag vor dem Schritt des eigentlichen Verbindens des Belages mit dem Synchronring,
- **Fig. 4:**: eine Darstellung entsprechend Figur 3 nach Verbinden des Belages mit der Lagerfläche des Synchronringes und
- **Fig. 5:**: eine Darstellung entsprechend Figur 4 mit dem dem in Figur 4 dargestellten Ausschnitt des Ringkörpers diametral gegenüberliegenden Bereich.

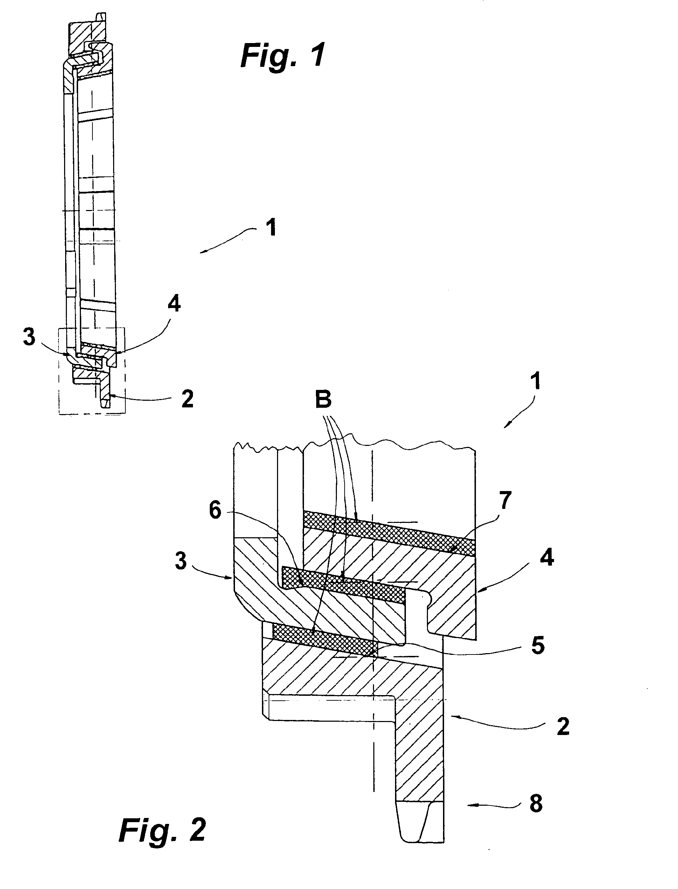

Eine 3-fach Konus Synchronisierung 1 besteht aus drei einzelnen Ringkörpern 2, 3, 4, die konzentrisch zueinander angeordnet sind. Die Ringkörper 2, 3, 4 weisen jeweils konische Lagerflächen auf. Eine solche Lagerfläche ist in Figur 2 zu dem Ringkörper 2 mit den Bezugszeichen 5 gekennzeichnet. Diese stellt aufgrund ihrer Konizität eine kegelstumpfförmige Lagerfläche dar. Die Lagerfläche des Ringkörpers 3 ist mit den Bezugszeichen 6 und diejenige des Ringkörpers 4 mit den Bezugszeichen 7 gekennzeichnet. Der Ringkörper 2 trägt umfänglich einen Verzahnungsbereich 8.

Die Ringkörper 2 und 4 sind Messingteile und im Wege eines Schmiedeprozesses in ihre in den Figuren dargestellte Formgebung gebracht worden. Der Ringkörper 3 ist ein Stahlteil, welches im Wege eines Blechtiefziehprozesses in die in den Figuren gezeigte Form gebracht worden ist. Zwischen den einzelnen Ringkörpern 2, 3, 4 sind reibungs- und verschleißoptimierte Beläge B angeordnet, wobei auf jeder Lagerfläche 5, 6, 7 ein solcher Belag B aufgebracht ist.

Jeder Belag B wird durch ein Beschichtungsprozess auf die jeweilige Lagerfläche des entsprechenden Ringkörpers 2, 3, 4 aufgebracht. Eine solcher beschichteter Ringkörper 2, 3, 4, wird wie folgt hergestellt, wobei dieser Prozeß nachfolgend anhand des Ringkörpers 2 beschrieben ist; die anderen Beläge B werden in gleicher Weise auf die jeweiligen Lagerflächen aufgebracht.

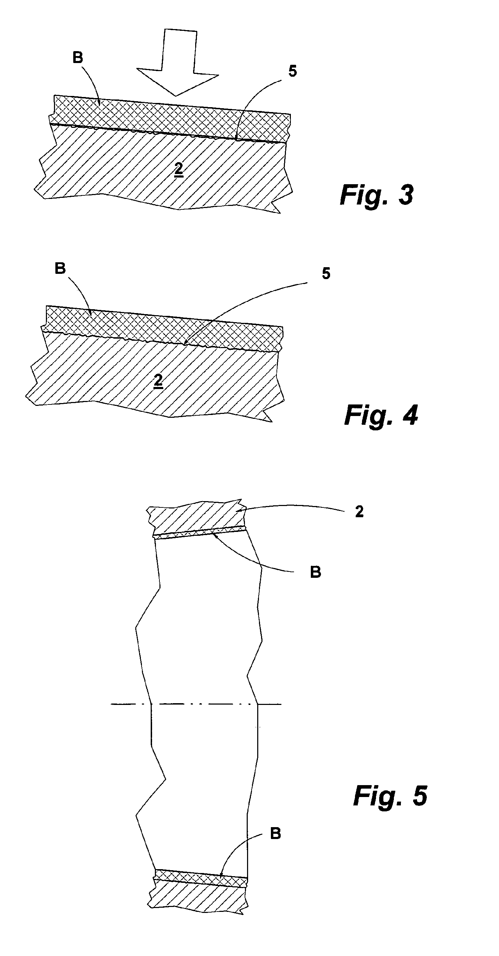

Die konisch verlaufende Lagerfläche 5 des Ringkörpers 2 ist bereits durch den Schmiedeprozess zum Erstellen des Ringkörpers 2 gebildet worden. Die Lagerfläche 5 weist eine gewisse Rauhigkeit bzw. Unebenheit, wie dies in Figur 3 anhand einer vergrößerten Darstellung des Übergangsbereichs zwischen dem Ringkörper 2 und dem Belag B erkennbar ist, und auch eine gewisse Exzentrizität gegenüber dem Verzahnungsbereich 8 auf. Die Beschichtung der Lagerfläche 5 mit dem Belag B erfolgt dadurch, dass ohne Zwischenschaltung eines spanenden Bearbeitungsschrittes zum Glätten der Oberfläche und zum Ausgleich der Exzentrizität gegenüber dem Verzahnungsbereich 8 des geschmiedeten Ringkörpers 2 ein organischer, noch nicht ausgehärteter Belag B auf die Oberfläche 5 gelegt wird, wie dies in Figur 3 anhand des Ringkörpers 2 gezeigt ist. Der Belag B ist in diesem Zustand noch nicht ausgehärtet. Nachfolgend wird dem Belag B Wärme zugeführt und gleichzeitig wird der Belag B - wie durch den Pfeil in Figur 3 angedeutet - unter einen zur Oberfläche 5 des Ringkörpers 2 hin gerichteten Druck gesetzt. Infolge der Erwärmung des Belages B erweicht dieser und wird in die Oberflächenvertiefungen der Oberfläche 5 des Ringkörpers 2 eingepresst. Gleichzeitig wird infolge einer entsprechenden Anordnung von Ringkörper 2 und dem Druckkörper eines Druckwerkzeuges die gewünschte Konzentrizität der durch den Belag B gebildeten Lagerfläche mit dem Verzahnungsbereich 8 hergestellt. Ausgenutzt werden für einen solchen Exzentrizitätsausgleich die duktilen Eigenschaften des in diesem Verfahrensschritt noch nicht ausgehärteten Belages B, so dass nach einem solchen Ausgleich der Belag B umfänglich eine unterschiedliche Stärke aufweist. Mithin wird der Belag B bei einem Exzentrizitätsausgleich bzw. einer Exzentrizitätskompensation in eine konzentrische Anordnung zum Verzahnungsbereich gebracht und anschließend ausgehärtet.

Der auf seiner Lagerfläche 5 aufgebrachte Belag B ist in Figur 4 dargestellt. Aus dieser Figur ist deutlich erkennbar, dass infolge der mit der Erwärmung einhergehenden Druckbeaufschlagung des Belages B im Prozess seiner Aushärtung die Oberflächenunebenheiten bzw. -rauhigkeiten verfüllt worden sind und dass insbesondere daher auch eine formschlüssige Verklammerung des Belages B mit dem Ringkörper 2 gegeben ist. Figur 5 zeigt den Ausschnitt des Ringkörpers 2 der Figur 4 zusammen mit seinem zur Achse des Ringkörpers 2 diametral gegenüberliegenden Bereich. Die unterschiedliche Dicke des Belages B macht deutlich, dass der oben beschriebene Exzentrizitätsausgleich stattgefunden hat.

Die Wärmezufuhr und die Druckbeaufschlagung kann beispielsweise durch Einführen eines konischen Druck- und Wärmewerkzeuges in die durch den Ringkörper 2 eingeschlossene Öffnung herbeigeführt werden.

Der Belag ist zweckmäßigerweise ein aus einer Matte hergestellter Streifen, der in die entsprechende Form zum Anliegen an der jeweiligen Lagerfläche gebracht worden ist.

Mit diesem Verfahren können Gegenstände, insbesondere Metallteile nicht nur einseitig, sondern auch zwei- oder mehrseitig beschichtet werden.

### Bezugszeichenliste

- 1: 3-fach Konus Synchronisierung
- 2: Ringkörper
- 3: Ringkörper
- 4: Ringkörper
- 5: Lagerfläche
- 6: Lagerfläche
- 7: Lagerfläche
- 8: Verzahnungsbereich

- B: Belag

## Patentansprüche

1. Verfahren zum Herstellen eines im Bereich einer Lagerfläche (5, 6, 7) mit einem reibungsminderen Belag (B) beschichteten Gegenstandes, **dadurch gekennzeichnet, dass** die Lagerfläche (5, 6, 7) des Gegenstandes (2, 3, 4) ohne Zwischenschaltung eines spanenden Bearbeitungsschrittes mit dem Belag (B) mit folgender Maßgabe beschichtet wird:
- Aufbringen eines organischen Belages (B) in seinem nicht ausgehärteten Zustand auf die Lagerfläche (5, 6, 7),
- Erwärmen des Belages (B) unter Ausübung eines zur Oberfläche (5, 6, 7) des Gegenstandes gerichteten Druckes, wodurch der Belag (B) zunächst erweicht, um auf der Oberfläche des Gegenstandes (2, 3, 6) unterhalb des Belages (B) befindliche Unebenheiten auszugleichen, und
- anschließend Aushärten des Belages (B).

2. Verfahren nach Anspruch 1, **dadurch gekennzeichnet, dass** der nicht ausgehärtete Belag (B) eine Stärke mit einem Aufmass gegenüber der tatsächlich sich aus diesem Belag (B) nach einem Aushärten ergebenden Stärke aufweist.

3. Verfahren nach Anspruch 1 oder 2, **dadurch gekennzeichnet, dass** der zu beschichtende Gegenstand ein Metallteil (2, 3, 4) ist.

4. Verfahren nach Anspruch 3, **dadurch gekennzeichnet, dass** das Metallteil (2, 4) durch Schmieden erstellt wird.

5. Verfahren nach 3 oder 4, **dadurch gekennzeichnet, dass** als Metallteile Synchronisierungsringe (2, 4) eingesetzt werden.
